# FASCICULE DE BREVET EUROPEEN

(11) **EP 3 411 277 B1**
(45) Date de publication et mention de la délivrance du brevet: **29.04.2020**
(21) Numéro de dépôt: 17706564.6
(22) Date de dépôt: 24.01.2017
(51) Int. Cl.: B60W 30/18, B60W 10/02, B60W 10/06, B60W 30/20

(54) **MÉTHODES ET SYSTÈMES DE RELANCE DU RÉGIME MOTEUR POUR SORTIR DU MODE DE FONCTIONNEMENT EN ROUE LIBRE**
VERFAHREN UND SYSTEME ZUM WIEDERAUFBAU DER MOTORDREHZAHL ZUM VERLASSEN DES FREILAUFBETRIEBSMODUS
METHODS AND SYSTEMS FOR RESTORING THE ENGINE SPEED FOR EXITING THE FREE WHEEL OPERATING MODE

(30) Priorité: 04.02.2016 FR 1650877
(43) Date de publication de la demande: 12.12.2018
(73) Titulaire: PSA AUTOMOBILES S.A., 78300 Poissy (FR)
(72) Inventeur: GRISI, Fabrice, 92250 La Garenne Colombes (FR); DOURSTER, Maximilien, 75017 Paris (FR)
(86) Numéro de dépôt international: PCT/FR2017/050150
(87) Numéro de publication internationale: WO 2017/134365

(56) Documents cités:
- EP-A1- 2 327 901
- DE-A1-102012 212 230
- FR-A1- 2 824 790

## Description

La présente invention se rapporte généralement aux méthodes et systèmes de contrôle du mode de fonctionnement en roue libre d'un véhicule automobile, et plus particulièrement à des méthodes et systèmes de relance du régime moteur, pour sortir de ce mode de fonctionnement.

Le mode de fonctionnement en roue libre, également connu sous la dénomination « mode de fonctionnement en régime débrayé » (ou « coasting » en terminologie anglo-saxonne), consiste à ouvrir la chaîne de traction du véhicule, lorsque le couple demandé par le conducteur devient faible ou nul. Le moteur est, dans ce cas, désolidarisé des roues du véhicule et peut tourner au ralenti ou s'arrêter.

En situation réelle d'utilisation d'un véhicule, le mode de fonctionnement en roue libre est généralement activé lorsque l'énergie cinétique accumulée par le véhicule est suffisante pour faire avancer ce véhicule à la vitesse voulue par le conducteur. Du fait de son inertie, le véhicule peut, en effet, continuer à rouler sur des routes plates ou peu pentues, sans que le moteur n'ait besoin de fournir un couple moteur aux roues. De même, sur une route descendante, le véhicule peut conserver sa vitesse, voire accélérer, sans besoin de puissance moteur. Il est également possible d'activer ce mode de fonctionnement avec la fonction « stop and start », si le véhicule en est équipé.

Ainsi, en mode roue libre, le moteur peut tourner au ralenti ou être arrêté, pendant que le véhicule poursuit sa course. A titre d'exemple, lorsque le conducteur anticipe son arrivée sur des obstacles nécessitant une diminution de vitesse, le conducteur relâche plus tôt l'accélérateur, et profite de l'énergie cinétique du véhicule pour parcourir en mode roue libre la distance le séparant de l'obstacle.

Le document FR 2 824 790 A1 décrit un procédé de commande d'un véhicule automobile fonctionnant en roue libre, procédé dans lequel sont détectés une grandeur représentant au moins une vitesse du véhicule, un actionnement d'un frein et/ ou d'un élément caractéristique d'alimentation en énergie ou en carburant et un état du moteur et, dans le cas d'un actionnement du frein et/ ou d'un actionnement de l'élément caractéristique d'alimentation en carburant, l'embrayage est fermé, où, avant la fermeture dé l'embrayage jusqu'à l'achèvement d'un mode de roulage en roue libre, la vitesse de rotation de l'arbre de commande de la boîte de vitesses ou une grandeur correspondante représentant cette vitesse de rotation est détectée et où le régime moteur est réglé de façon telle que les deux vitesses de rotation coïncident ou sont alignées l'une sur l'autre.

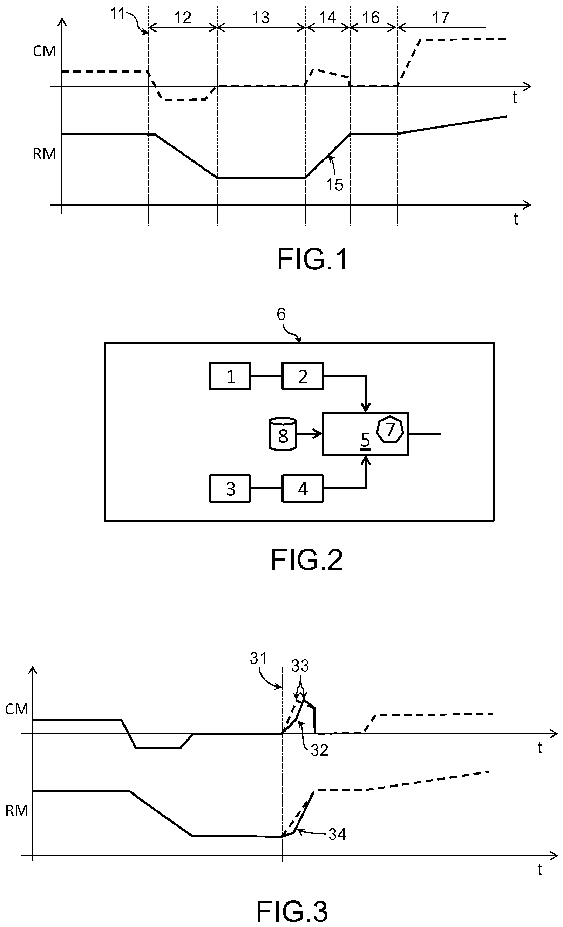

Le graphique de la figure 1 illustre le comportement en régime **RM** et en couple **CM** (couple moyen effectif disponible sur le vilebrequin, dans un moteur à combustion interne) du moteur du véhicule, en fonction du temps **t,** de l'entrée à la sortie du mode de fonctionnement en roue libre de ce véhicule.

On distingue, dans le graphe de la figure 1, différentes phases, correspondant respectivement
- à l'activation **11** du mode de fonctionnement en roue libre du véhicule automobile, lorsque le conducteur relâche l'accélérateur et n'actionne pas le frein (c'est-à-dire, en sortie d'une phase d'accélération);
- à l'entrée **12** en ce mode de fonctionnement, réalisée par l'ouverture de la chaîne de traction en commandant le débrayage du moteur dont le régime moteur **RM** est aussitôt réduit ;
- au maintien **13** du régime moteur **RM** au ralenti (voire à l'annulation de ce régime moteur), auquel correspond un couple moteur **CM** nul;
- à la sortie **14** du mode de fonctionnement en roue libre, déclenchée par l'appui du conducteur sur la pédale d'accélérateur ou sur la pédale de frein du véhicule ;
- à la fermeture **16** de la chaîne de traction, pendant que le régime moteur **RM** est maintenu constant.

En particulier, la sortie **14** du mode de fonctionnement en roue libre implique une relance **15** du régime moteur **RM,** pour atteindre un régime moteur cible, ce régime moteur **RM** cible étant celui de l'arbre d'entrée de la boite de vitesse, et pouvant être différent de celui à l'activation du mode de fonctionnement en roue libre.

Une fois le régime moteur **RM** cible atteint, la chaîne de traction est refermée (étape **16** sur la figure 1), pendant que le moteur maintient constant son régime **RM.**

Le couple moteur **CM** requis par le conducteur est ensuite commandé lors de la phase **17.** En effet, si la sortie **14** du mode de fonctionnement en roue libre est déclenchée par l'appui sur la pédale d'accélérateur, une augmentation du régime moteur **RM** (ce qui est le cas de la phase **17** de la figure 1) est requise, une fois la chaine de traction est fermée, pour rejoindre progressivement le régime de l'arbre d'entrée de la boite de vitesse. En revanche, si la sortie **14** du mode de fonctionnement en roue libre est déclenchée par l'appui sur la pédale de frein, une réduction du couple moteur **CM** (non représentée) est requise, pour rejoindre progressivement la volonté du conducteur. Autrement dit, une fois la chaine de traction fermée (donc après la relance **14** de régime), le couple réalisé par le moteur est, respectivement selon que la pédale d'accélérateur ou la pédale de frein est actionné, positif ou négatif.

Le mode de fonctionnement en roue libre a fait ses preuves, notamment en tant qu'opportunité intéressante pour réduire la consommation en carburant et l'émission polluante, lors de l'usage d'un véhicule automobile.

Cependant, ce mode de fonctionnement ne va pas sans imperfections, particulièrement en ce qui concerne la relance **15** du régime moteur **RM,** pour sortir de ce mode de fonctionnement en roue libre.

La gestion actuelle de la relance **15** du régime moteur pour sortir du mode de fonctionnement en roue libre apporte des pénalités, en termes de consommation et d'émissions polluantes.

En effet, le couple moteur de la relance **15** est, aujourd'hui, piloté par un régulateur de régime, par exemple un régulateur proportionnel, de sorte que plus l'écart entre le régime moteur et sa cible de régime est important, plus le couple à commander est élevé. Il en résulte donc un fort couple en début de la régulation. Ceci correspondant sur la figure 1 à la pente à réaliser dans le profil du couple moteur **CM** en sortant de la phase de maintien **13** lors de laquelle ce couple moteur **CM** est initialement nul. Plus cette pente ou ce gradient de couple moteur **CM** est important, plus la sortie du mode de fonctionnement en roue libre est pénalisante.

Un fort changement de charge (dynamique air pour l'essence), ainsi qu'une faible thermique échappement en sortie de ralenti (essence et diesel) sont très néfastes pour la pollution. La richesse air/carburant en essence et le post-traitement pour essence et diesel sont, dans ce cas, respectivement non maîtrisés et peu efficaces.

Plus généralement, fournir une forte charge moteur pour atteindre un régime moteur cible permettant la fermeture de la chaîne de traction juste après un régime moteur au ralenti,
- est énergivore, ce qui réduit le gain en consommation que le mode de fonctionnement en roue libre peut apporter ;
- génère de nombreuse particules polluantes ; et
- produit des signaux acoustiques perceptibles par le conducteur.

Un objectif est de proposer un système et une méthode de relance du régime moteur pour sortir du mode de fonctionnement en roue libre, ce système et cette méthode permettant de réduire la consommation en carburant, tout en garantissant une conduite ergonomique et confortable au conducteur du véhicule.

Un autre objectif est de proposer une méthode de contrôle optimale du régime moteur, lors de la sortie du mode de fonctionnement en roue libre pour atteindre un régime moteur cible, cette méthode permettant la fermeture de la chaîne de traction, tout en respectant des contraintes d'ordre économique, environnemental, ou encore d'agrément de conduite.

A ces fins, il est proposé, selon un premier aspect, une unité de contrôle pour commander un couple moteur permettant de sortir d'un mode de fonctionnement en roue libre d'un véhicule automobile pourvu d'un organe d'accélération et d'un organe de freinage, la sortie du mode de fonctionnement en roue libre pouvant être déclenchée par l'enfoncement de l'organe d'accélération ou par l'actionnement de l'organe de freinage, l'unité de contrôle étant pourvue d'un régulateur de régime, ce régulateur de régime étant configuré pour calculer un niveau de couple moteur à commander par l'unité de contrôle pour atteindre le régime moteur cible, cette unité de contrôle étant configurée, tant que le régime moteur cible n'est pas atteint, pour
- comparer le niveau de couple moteur calculé par le régulateur de régime à un niveau seuil de couple moteur prédéfini;
- commander le niveau de couple moteur donné par la valeur minimale entre le niveau seuil de couple moteur et le niveau de couple moteur calculé par le régulateur de régime, le niveau seuil de couple moteur étant associé à un intervalle de degrés d'enfoncement de l'organe d'accélération et à un intervalle de régimes moteur instantanés du véhicule automobile.

L'unité de contrôle présente, selon diverses réalisations, les caractéristiques suivantes, le cas échéant combinées:
- l'actionnement de l'organe de freinage est considéré comme étant un degré d'enfoncement nul de l'organe d'accélération.

Il est proposé, selon un deuxième aspect, une méthode pour commander un couple moteur permettant de sortir d'un mode de fonctionnement en roue libre d'un véhicule automobile pourvu d'un organe d'accélération et d'un organe de freinage, la sortie du mode de fonctionnement en roue libre pouvant être déclenchée par l'enfoncement de l'organe d'accélération ou par l'actionnement de l'organe de freinage, l'unité de contrôle étant pourvue d'un régulateur de régime, ce régulateur de régime étant configuré pour calculer un couple moteur à commander par l'unité de contrôle pour atteindre le régime moteur cible, cette méthode comprenant
- une étape de comparaison du couple moteur calculé par le régulateur de régime à un niveau seuil de couple moteur prédéfini;
- une étape d'association du niveau seuil de couple moteur à un intervalle de degrés d'enfoncement de l'organe d'accélération et à un intervalle de régimes moteur instantanés du véhicule automobile;
- une étape de commande du niveau de couple moteur donné par la valeur minimale entre le niveau seuil de couple moteur et le niveau de couple moteur calculé par le régulateur de régime ;
- réitération de l'étape de comparaison et l'étape de commande tant que le régime moteur cible n'est pas atteint.

La méthode de commande comporte, selon diverses réalisations, les caractéristiques suivantes, le cas échéant combinées:
- une étape de récupération, depuis une base de données, du niveau seuil de couple moteur ;
- une étape de considération de l'actionnement de l'organe de freinage comme étant un degré d'enfoncement nul de l'organe d'accélération.

L'invention se rapporte, selon un troisième aspect, à un véhicule automobile comprenant l'unité de contrôle présentée ci-dessus.

Ce véhicule automobile comprend, en outre, un moyen de stockage (électronique/informatique), comme un calculateur, qui stocke une base de données intégrant une pluralité de niveaux seuils de couple moteur. Avantageusement, chacun de ces niveaux seuils de couple moteur est associé à un intervalle de degrés d'enfoncement de l'organe d'accélération et à un intervalle de régimes moteur instantanés du véhicule automobile.

D'autres caractéristiques et avantages de l'invention apparaîtront plus clairement et de manière concrète à la lecture de la description ci-après de modes de réalisation, faite ci-après en référence aux dessins annexés dans lesquels :
- la figure 1 illustre schématiquement le comportement en couple et en régime du moteur d'un véhicule automobile, suite à l'activation du mode de fonctionnent en roue libre ;
- la figure 2 illustre schématiquement un véhicule automobile comprenant des moyens pour la relance, selon divers modes de réalisation, du régime moteur permettant de sortir du mode de fonctionnement en roue libre ;
- la figure 3 illustre schématiquement le comportement dans le temps du régime moteur et du couple moteur, selon divers modes de réalisation, lors de la sortie du mode de fonctionnement en roue libre d'un véhicule automobile.

En se référant à la figure 2, il est représenté un véhicule **6** automobile comprenant un organe **1** d'accélération, appelé par la suite « pédale **1** d'accélérateur ». Cette pédale **1** d'accélérateur est susceptible d'être actionnée par un conducteur du véhicule **6** automobile, pour la commande du couple moteur **CM.** Un capteur **2** de position permet de mesurer le degré d'enfoncement de la pédale **1** d'accélérateur. Ce capteur **2** de position communique le degré d'enfoncement de la pédale **1** d'accélérateur à une unité **5** de contrôle.

Le véhicule **6** automobile comporte, également, un organe **3** de freinage, appelé par la suite « pédale **3** de frein ». Cette pédale **3** de frein est susceptible d'être actionnée par un conducteur du véhicule **6** automobile, pour appliquer un couple de frein (c.à.d. un couple moteur **CM** négatif) aux roues du véhicule **6** automobile.

Un deuxième capteur **4,** distinct ou non du premier capteur **2** de position, est configuré pour capter l'état appuyé ou l'état relâché de la pédale **3** de frein et pour communiquer cet état à l'unité **5** de contrôle. L'unité **5** de contrôle commande, en conséquence, un couple de freinage (un couple moteur **CM** négatif) lorsque la pédale **3** de frein est actionnée (appuyée).

L'unité **5** de contrôle comprend un régulateur **7** de régime, configuré pour calculer un couple moteur **CM** de relance en fonction de l'écart entre le régime moteur **RM** instantané du véhicule **6** et le régime moteur **RM** cible permettant la fermeture de la chaîne de traction. Dans un mode de réalisation, le régulateur **7** de régime est un régulateur proportionnel.

L'unité **5** de contrôle est, en outre, pourvue d'une base de données **8** de niveaux seuils de couple moteur **CM.** Cette base de données **8** associe un niveau seuil de couple moteur **CM** à un couple de régime moteur instantané et de degré d'enfoncement de la pédale **1** d'accélérateur.

A titre d'illustration non-exhaustive, la base de données **8** de niveaux seuils de couple moteur **CM** comprend des données permettant d'établir une correspondance entre le couple (régime moteur instantané, degré d'enfoncement de la pédale **1** d'accélérateur) et un niveau seuil de couple moteur **CM** comme suit :

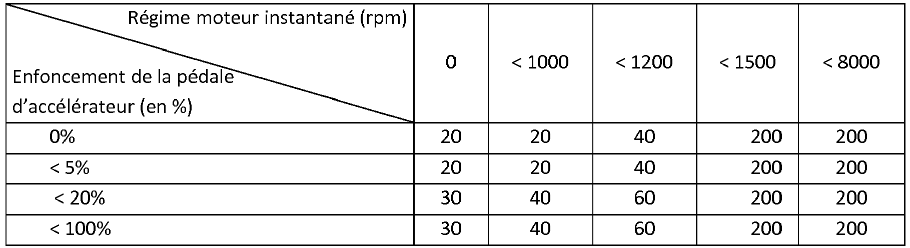

Dans le tableau illustratif ci-dessus, un niveau seuil de couple moteur est associé
- à un intervalle de degrés d'enfoncement de la pédale **1** d'accélération (lignes du tableau ci-dessus, la valeur 0 étant considérée comme étant un intervalle à un seul élément) ; et
- à un intervalle de régimes moteur instantanés du véhicule **6** automobile (colonnes du tableau ci-dessus, la valeur 0 étant considérée comme étant un intervalle à un seul élément).

Dans le cas où l'interruption du mode de fonctionnement est déclenchée par l'actionnement de la pédale **3** de frein, le degré d'enfoncement de la pédale **1** d'accélérateur est considéré comme étant nul.

A titre d'exemple, lorsque
- le régime moteur instantané du véhicule est nul (c.à.d. 0 révolutions par minute (rpm)) ; et
- le pourcentage d'enfoncement de la pédale **1** d'accélérateur est de 0% (ce qui suppose l'interruption du mode de fonctionnement en roue libre par l'actionnement de la pédale **3** de frein) ;
le niveau seuil de couple moteur **CM** est de 20 Newton-mètre. Autrement dit, l'unité **5** de contrôle ne peut commander, dans ce cas, un niveau de couple moteur **CM** supérieur à 20 Newton-mètre.

De plus, selon ce tableau illustratif, lorsque
- le régime moteur instantané du véhicule est entre 1200 rpm et 1500 rpm (par exemple, 1300 rpm) ; et
- le pourcentage d'enfoncement de la pédale **1** d'accélérateur est entre 20% et 100% (par exemple, 55%),
le niveau seuil de couple moteur **CM** est de 200 Newton-mètre. Autrement dit, l'unité **5** de contrôle ne peut commander, dans ce cas, un niveau de couple moteur supérieur à 200 Newton-mètre.

Toujours selon ce tableau illustratif, lorsque le régime moteur instantané est égal à 800 rpm et le degré d'enfoncement de la pédale **1** d'accélérateur est égale à 15%, alors le niveau seuil de couple moteur **CM** est de 40 Newton-mètre.

A la sortie d'une phase d'accélération, par exemple à l'approche d'un obstacle où le conducteur relâche la pédale **1** d'accélérateur sans actionner la pédale **3** de frein, le mode de fonctionnement en roue libre s'active, en ouvrant la chaîne de traction du véhicule **6** automobile.

Tant que ni la pédale **1** d'accélérateur ni la pédale **3** de frein n'est actionnée, aucun couple moteur ou de freinage n'est commandé par l'unité **5** de contrôle, et le véhicule poursuit sa course en mode roue libre.

L'appui sur la pédale **1** d'accélérateur ou sur la pédale **3** de frein déclenche (étape **31** sur la figure **3****)** la sortie du mode de fonctionnement en roue libre.

Pour sortir du mode de fonctionnement en roue libre, l'unité **5** de contrôle se charge de
- récupérer depuis la base de données **8** le niveau seuil de couple moteur associé au régime moteur instantané du véhicule **6** et du degré d'enfoncement de la pédale **1** d'accélérateur (l'appui sur la pédale **3** de frein signifie un degré d'enfoncement nul de la pédale **1** d'accélérateur) ;
- récupérer le niveau de couple moteur calculé par le régulateur **7** de régime, ce couple moteur étant calculé en fonction de l'écart entre le régime moteur instantané et le régime moteur cible permettant la fermeture de la chaîne de traction;
- comparer le niveau seuil de couple moteur récupéré depuis la base de données **8** au niveau de couple moteur calculé par le régulateur **7** de régime ;
- commander le niveau de couple moteur donné par la valeur minimale entre le couple moteur seuil récupéré depuis la base de données **8** et le couple moteur calculé par le régulateur **7** de régime ;
- réitérer les étapes précédentes jusqu'à ce que le régime moteur cible soit atteint.

Avantageusement, il en résulte qu'en début de la relance du régime moteur, où la valeur de couple moteur calculée par le régulateur **7** de régime est importante à cause de l'écart important entre le régime moteur instantané (en l'occurrence, au ralenti) et le régime moteur cible, c'est le niveau seuil de couple moteur récupéré depuis la base de données **8** qui sera commandé par l'unité **5** de contrôle.

En revanche, lorsque le régime moteur instantané est proche du régime moteur cible, le couple moteur calculé par le régulateur **7** de régime est inférieur aux niveaux seuils de couple moteur récupéré depuis la base de données **8,** de sorte que c'est le niveau de couple moteur calculé par le régulateur **7** de régime qui sera commandé par l'unité **5** de contrôle.

Il s'ensuit qu'un ou plusieurs couple moteur **CM** peuvent être commandé(s) par l'unité **5** de contrôle, avant que le régime moteur cible ne soit atteint. Ceci a pour effet de permettre une progressivité en sortant du régime moteur au ralenti.

Ainsi, au lieu de commander directement le couple moteur calculé par le régulateur **7** de régime, l'unité **5** de contrôle peut procéder d'abord à commander un premier niveau seuil **32** intermédiaire de couple moteur **CM,** strictement inférieur à celui calculé par le régulateur **7** de régime. Ceci a pour effet de permettre
- une transition de couple moteur **CM** plus lisse, depuis un couple moteur nul vers un deuxième niveau **33** de couple moteur, requis pour sortir du mode de fonctionnement en roue libre; et par conséquent
- une évolution **34** plus lisse du régime moteur **RM,** depuis un régime moteur au ralenti ou nul vers un régime moteur cible permettant la fermeture de la chaîne de traction du véhicule, et donc de sortir du mode de fonctionnement en roue libre.

Il en résulte, avantageusement, qu'en commandant un ou plusieurs niveau seuil **32** de couple moteur avant de commander le niveau **35** de couple moteur requis pour sortir du mode de fonctionnement en roue libre, le gradient (ou la variation dans le temps) du couple moteur en début de la régulation est plus faible qu'en commandant directement le deuxième niveau **33** de couple moteur pour atteindre le régime moteur cible.

Les méthodes et systèmes décrits ci-dessus ont pour avantages de
- limiter les impacts de pollutions de chaque relance, par un bornage systématique du couple moteur en début de relance de régime moteur pour sortir du mode de fonctionnement en roue libre ;
- calibrer d'une manière simplifiée le régulateur de régime proportionnel ;
- rendre possible l'indexation de la limite du couple sur la volonté du conducteur (limitation à un niveau faible de couple moteur en déclenchant la sortie du mode de fonctionnement en roue libre par appui sur la pédale de frein, non-limitation du couple moteur pour une volonté conducteur extrême via un degré d'enfoncement important de la pédale d'accélérateur).

Avantageusement, les méthodes et systèmes décrits ci-dessus de relance du régime moteur pour sortir du mode de fonctionnement en roue libre permettent de répondre à la demande du conducteur, tout en satisfaisant des contraintes d'ordre économique et environnemental (consommation de carburant, et pollution), ou encore d'agrément de conduite (dynamique longitudinale du véhicule, bruits).

## Revendications

1. Unité **(5)** de contrôle pour commander un couple moteur **(CM)** permettant de sortir d'un mode de fonctionnement en roue libre d'un véhicule **(6)** automobile pourvu d'un organe **(1)** d'accélération et d'un organe **(3)** de freinage, la sortie du mode de fonctionnement en roue libre pouvant être déclenchée par l'enfoncement de l'organe (**1**) d'accélération ou par l'actionnement de l'organe **(3)** de freinage, l'unité **(5)** de contrôle étant pourvue d'un régulateur **(7)** de régime, ce régulateur **(7)** de régime étant configuré pour calculer un niveau de couple moteur (**CM**) à commander par l'unité **(5)** de contrôle pour atteindre le régime moteur cible, cette unité de contrôle étant **caractérisée en ce qu'**elle est configurée, tant que le régime moteur cible n'est pas atteint, pour
- comparer le niveau de couple **moteur(CM)** calculé par le régulateur **(7)** de régime à un niveau seuil de couple moteur prédéfini;
- commander le niveau de couple moteur donné par la valeur minimale entre le niveau seuil de couple moteur et le niveau de couple moteur calculé par le régulateur **(7)** de régime, le niveau seuil de couple moteur étant associé à un intervalle de degrés d'enfoncement de l'organe (1) d'accélération et à un intervalle de régimes moteur instantanés du véhicule automobile.

2. Méthode pour commander un couple moteur **(CM)** permettant de sortir d'un mode de fonctionnement en roue libre d'un véhicule **(6)** automobile pourvu d'un organe **(1)** d'accélération et d'un organe **(3)** de freinage, la sortie du mode de fonctionnement en roue libre pouvant être déclenchée par l'enfoncement de l'organe **(1)** d'accélération ou par l'actionnement de l'organe **(3)** de freinage, l'unité **(5)** de contrôle étant pourvue d'un régulateur **(7)** de régime, ce régulateur **(7)** de régime étant configuré pour calculer un couple moteur à commander par l'unité **(5)** de contrôle pour atteindre le régime moteur cible, cette méthode étant **caractérisée en ce qu'**elle comprend
- une étape de comparaison du couple moteur calculé par le régulateur **(7)** de régime à un niveau seuil de couple moteur prédéfini;
- une étape d'association du niveau seuil de couple moteur à un intervalle de degrés d'enfoncement de l'organe (1) d'accélération et à un intervalle de régimes moteur instantanés du véhicule (6) automobile.
- une étape de commande du niveau de couple moteur donné par la valeur minimale entre le niveau seuil de couple moteur et le niveau de couple moteur calculé par le régulateur **(7)** de régime ;
- réitération de l'étape de comparaison et l'étape de commande tant que le régime moteur cible n'est pas atteint.

3. Méthode selon la revendication 2 comprenant en outre une étape de récupération depuis une base **(8)** de données du niveau seuil de couple moteur.

4. Véhicule **(6)** automobile comprenant l'unité **(5)** de contrôle selon la revendication 1.

5. Véhicule **(6)** automobile selon la revendication précédente, **caractérisé en ce qu'**il comprend un moyen de stockage pour stocker une base de données **(8)** intégrant une pluralité de niveaux seuils de couple moteur.

6. Véhicule (6) automobile selon la revendication précédente, dans lequel chacun de ladite pluralité de niveaux seuils de couple moteur est associé à un intervalle de degrés d'enfoncement de l'organe **(1)** d'accélération et à un intervalle de régimes moteur instantanés du véhicule **(6)** automobile.

## Patentansprüche

1. Steuereinheit (5) zum Steuern eines Antriebsdrehmoments (CM), das es erlaubt, einen Freilaufbetriebsmodus eines Kraftfahrzeugs (6) zu verlassen, das mit einem Beschleunigungselement (1) und einem Bremselement (3) versehen ist, wobei das Verlassen des Freilaufbetriebsmodus' durch das Hinunterdrücken des Beschleunigungselements (1) oder durch das Betätigen des Bremselements (3) ausgelöst werden kann, wobei die Steuereinheit (5) mit einem Drehzahlregler (7) versehen ist, wobei dieser Drehzahlregler (7) konfiguriert ist, um ein Antriebsdrehmomentniveau (CM) zu berechnen, das die Steuereinheit (5) steuern muss, um die Zielmotordrehzahl zu erreichen, wobei diese Steuereinheit **dadurch gekennzeichnet ist, dass** sie konfiguriert ist, um, solange die Zielmotordrehzahl nicht erreicht ist,
- das Antriebsdrehmomentniveau (CM), das von dem Drehzahlregler (7) berechnet wird, mit einem vordefinierten Antriebsdrehmomentschwellenniveau zu vergleichen;
- das Antriebsdrehmomentschwellenniveau, das von dem Mindestwert zwischen dem Antriebsdrehmomentschwellenniveau und dem von dem Drehzahlregler (7) berechneten Antriebsdrehmomentniveau gegeben wird, zu steuern, wobei das Antriebsdrehmomentschwellenniveau mit einem Intervall von Graden des Hinunterdrückens des Beschleunigungselements (1) und einem Intervall von Momentanmotordrehzahlen des Kraftfahrzeugs assoziiert ist.

2. Verfahren zum Steuern eines Antriebsdrehmoments (CM), das es erlaubt, einen Freilaufbetriebsmodus eines Kraftfahrzeugs (6) zu verlassen, das mit einem Beschleunigungselement (1) und einem Bremselement (3) versehen ist, wobei das Verlassen des Freilaufbetriebsmodus durch das Drücken des Beschleunigungselements (1) oder das Betätigen des Bremselements (3) ausgelöst werden kann, wobei die Steuereinheit (5) mit einem Drehzahlregler (7) versehen ist, wobei dieser Drehzahlregler (7) konfiguriert ist, um ein Antriebsdrehmoment zu berechnen, das von der Steuereinheit (5) gesteuert werden muss, um die Zielmotordrehzahl zu erreichen, wobei dieses Verfahren **dadurch gekennzeichnet ist, dass** es
- einen Schritt des Vergleichens des Antriebsdrehmoments, das von dem Drehzahlregler (7) berechnet wird, mit einem vordefinierten Antriebsdrehmomentschwellenniveau umfasst;
- einen Schritt des Assoziierens des Antriebsdrehmomentschwellenniveaus mit einem Intervall von Graden des Hinunterdrückens des Beschleunigungselements (1) und mit einem Intervall von Momentanmotordrehzahlen des Kraftfahrzeugs (6),
- einen Schritt des Steuerns des Antriebsdrehmomentniveaus, das von dem Mindestwert zwischen dem Antriebsdrehmomentschwellenniveau und dem von dem Drehzahlregler (7) berechneten Antriebsdrehmomentniveau gegeben wird;
- Wiederholen des Vergleichsschritts und des Steuerschritts, solange die Zielmotordrehzahl nicht erreicht ist.

3. Verfahren nach Anspruch 2, das außerdem einen Schritt des Rückgewinnens aus einer Datenbank (8) des Antriebsdrehmomentschwellenniveaus umfasst.

4. Kraftfahrzeug (6), das eine Steuereinheit (5) nach Anspruch 1 umfasst.

5. Kraftfahrzeug (6) nach dem vorstehenden Anspruch, **dadurch gekennzeichnet, dass** es ein Speichermittel zum Speichern einer Datenbank (8), die eine Vielzahl von Antriebsdrehmomentschwellenniveaus integriert, umfasst.

6. Kraftfahrzeug (6) nach dem vorstehenden Anspruch, wobei jedes der Vielzahl von Antriebsdrehmomentschwellenniveaus mit einem Intervall von Graden des Hinunterdrückens des Beschleunigungselements (1) und mit einem Intervall von Momentanmotordrehzahlen des Kraftfahrzeugs (6) assoziiert ist.

## Claims

1. A control unit (5) for controlling an engine torque (CM) making it possible to exit a freewheel operating mode of a motor vehicle (6) provided with an acceleration member (1) and a braking member (3), the exit from the freewheel operating mode being able to be triggered by the depression of the acceleration member (1) or by the actuation of the braking member (3), the control unit (5) being provided with a speed regulator (7), this speed regulator (7) being configured to calculate an engine torque level (CM) to be controlled by the control unit (5) for reaching the target engine speed, this control unit being **characterized in that** it is configured, as long as the target engine speed is not reached, to
- compare the engine torque level (CM) calculated by the speed regulator (7) against a predefined engine torque threshold level;
- control the engine torque level given by the minimum value between the engine torque threshold level and the engine torque level calculated by the speed regulator (7), the engine torque threshold level being associated with an interval of degrees of depression of the acceleration member (1) and with an interval of instantaneous engine speeds of the motor vehicle.

2. A method for controlling an engine torque (CM) permitting the exiting of a freewheel operating mode of a motor vehicle (6) provided with an acceleration member (1) and a braking member (3), the exiting of the freewheel operating mode being able to be triggered by the depression of the acceleration member (1) or by the actuation of the braking member (3), the control unit (5) being provided with a speed regulator (7), this speed regulator (7) being configured to calculate an engine torque to be controlled by the control unit (5) for reaching the target engine speed, this method being **characterized in that** it includes
- a step of comparison of the engine torque calculated by the speed regulator (7) against a predefined engine torque threshold level;
- a step of association of the engine torque threshold level against an interval of degrees of depression of the acceleration member (1) and an interval of instantaneous engine speeds of the motor vehicle (6);
- a step of control of the engine torque level given by the minimum value between the engine torque threshold level and the engine torque level calculated by the speed regulator (7);
- reiteration of the step of comparison and the step of control as long as the target engine speed is not reached.

3. The method according to Claim 2, further including a step of recovery from a database (8) of the engine torque threshold level.

4. A motor vehicle (6) including the control unit (5) according to Claim 1.

5. The motor vehicle (6) according to the preceding claim, **characterized in that** it includes a storage means for storing a database (8) integrating a plurality of engine torque threshold levels.

6. The motor vehicle (6) according to the preceding claim, in which each of said plurality of engine torque threshold levels is associated with an interval of degrees of depression of the acceleration member (1) and an interval of instantaneous engine speeds of the motor vehicle (6).
